# EUROPEAN PATENT SPECIFICATION

(11) **EP 1 771 024 B1**
(45) Date of publication and mention of the grant of the patent: **10.04.2013**
(21) Application number: 06008543.8
(22) Date of filing: 25.04.2006
(51) Int. Cl.: H04W 36/04, H04W 36/24

(54) **Mobile communication terminal and method for re-selecting cell in accordance of residual amount of battery**
Mobiles Kommunikationsgerät und Verfahren zur Neuauswahl des Betriebsnetzwerks gemäß dem Batterieladezustand
Dispositif de communication mobile et procédé pour reséléctionner le réseaux d'exploitation en accord avec le niveau de charge de la batterie

(30) Priority: 29.09.2005 KR 20050091434
(43) Date of publication of application: 04.04.2007
(73) Proprietor: LG ELECTRONICS INC., Youngdeungpo-ku Seoul 150-010 (KR)
(72) Inventor: Moon, Sung Jun, Kyungki-do 435-010 (KR)
(74) Representative: Urner, Peter

(56) References cited:
- EP-A1- 1 439 725
- WO-A2-01/43462
- "Universal Mobile Telecommunications System (UMTS)" ETSI STANDARDS, EUROPEAN TELECOMMUNICATIONS STANDARDS INSTITUTE, SOPHIA-ANTIPO, FR, [Online] vol. 3-R2, no. V330, June 2000 (2000-06), pages 1-46, XP014008624 ISSN: 0000-0001 Retrieved from the Internet: URL:www.etsi.org> [retrieved on 2007-02-22]

## Description

### BACKGROUND OF THE INVENTION

### Field of the Invention

The present invention relates to a mobile communication terminal capable of re-selecting a cell in accordance with a residual amount of a battery and a method of operating the same, and more particularly, to a mobile communication terminal capable of re-selecting a cell in accordance with a residual amount of a battery so that a cell measuring reference is re-selected in accordance with the residual amount of the battery to reduce the number of times of re-selecting a cell in accordance with change in the position of the cell and a method of operating the same.

### Description of the Background Art

In general, during change in position of a cell, a mobile communication terminal re-selects a cell between the cells adjacent to a connected cell in accordance with intensity of a receiving signal and data transmission rate of the connected cell and whether internal trigger is generated by change in position of the cell.

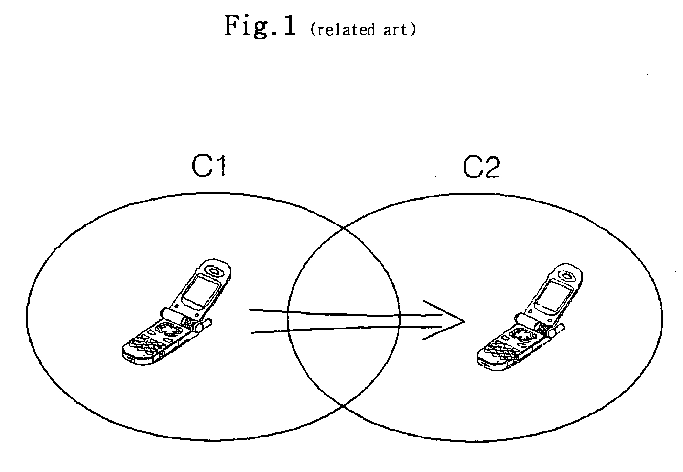

At this time, as illustrated in FIG. 1, during change in position of a currently connected cell C1, the mobile communication terminal re-selects the cell C2 whose receiving signal has the largest intensity between the cells adjacent to the connected cell in accordance with the intensity of the receiving signal and the data transmission rate of the connected cell to transmit and receive data.

Also, in a hierarchical cell structure (HCS) including a plurality of cells having at least one difference priorities, the mobile communication terminal selects the cell having a small radius so that the intensity of the receiving signal and the data transmission rate of the cell are large as the connected cell rather than the cell having a large radius in order to improve the data transmission rate.

At this time, during change in position from a connected cell to another cell, the mobile communication terminal re-selects the connected cell among the cells having priorities higher than the priority of the connected cell and radiuses equal to or smaller than the radius of the connected cell so that the intensity of the receiving signal is maintained.

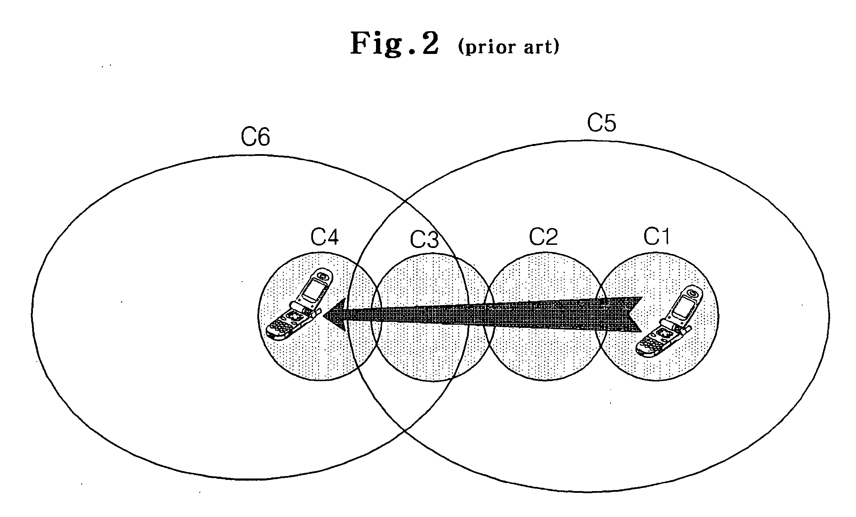

According to a conventional mobile communication terminal, as illustrated in FIG. 2, during change in position from a currently connected cell C1 to another cell C4, when the intensity of the receiving signal of the connected cell C1 is transited to be no more than a threshold value α in accordance with change in the position of the mobile communication terminal, the mobile communication terminal re-selects another cell C2 adjacent to the cell C1 as the connected cell.

Also, the mobile communication terminal re-selects a cell C3 adjacent to the cell C2 as the connected cell during change in position from the re-connected cell C2 and re-selects a cell C4 adjacent to the cell C2 as the connected cell during another change in position.

However, the conventional mobile communication terminal sets the cell measuring reference in accordance with the data transmission rate in received cell information or whether internal trigger is generated by the high speed movement of the mobile communication terminal and re-selects a cell among the cells measured in accordance with the measuring reference so that the cell is re-selected regardless of a consumption amount of a battery.

Also, the mobile communication terminal re-selects a cell among the cells having small radiuses and high priorities so that the consumption amount of battery increases according as the number of times of re-selecting a cell increases and that the battery is quickly consumed when the position of a cell is frequently changed.

The article "Universal Mobile Telecommunications System (UMTS)" ETSI Standards, European Telecommunications Standards Institute, Sophia Antipo, FR, vol. 3-R2, no. V330, June 2000 describes the technical specification for UMTS for the mobile procedures in idle mode and for cell reselection in connected mode. It describes the use of HCS and to measure on all intra and inter frequency cells unless it is triggered that the UE is fast moving. A fast moving UE is detected by the number of cells reselections during a time period. In addition to the cell reselection process the UE has may evaluate the relay link via probing, wherein the probing maybe influenced by a number of key system parameters, e.g. battery power level.

WO 01/43462 A2 describes a method and an apparatus for performing cell reselection for supporting efficiently hierarchy structures, wherein cells of one layer of the hierarchy have a different size than another layer of the hierarchy. The method includes steps of (a) identifying to a UE a layer to which individual cells in a neighbor cell list are associated; (b) when performing neighbor cell measurements for reselection purposes, avoiding a measurement of cells in the list that are larger than a current serving cell unless a Cell Selection (S) parameter falls below a search threshold parameter (Search), and is greater than zero; and (c), if S is less than or equal to zero, and no cell reselection to a better cell is in process, beginning a measurement of neighbor cells without regard for their hierarchical level. If the user equipment has made cell reselection to N different cells on the same hierarchical layer within a time Tmax, the user equipment initiates a reselection procedure for larger neighbor cells. This procedure accommodates user equipment that is moving at a relatively high speed through the cells. If the user equipment locates a larger cell, which fulfills cell reselection criteria Sn>0 and Qn>Qs+Qoff-sets,n+Qhyst for a period of time Treselection, cell reselection to the larger cell is made. Furthermore, if the user equipment performs a cell reselection to the larger cell, the user equipment does not attempt to reselect to a smaller cell within a time X, unless an immediate cell evaluation is triggered, wherein the time X can be prespecified, or can be set by the network.

### SUMMARY OF THE INVENTION

Accordingly, an object of the present invention is to solve at least the problems and disadvantages of the background art.

It is an object of the present invention to provide a mobile communication terminal capable of re-setting a cell measuring reference in accordance with a residual amount of a battery of a mobile communication terminal as well as received cell information and re-selecting a cell in accordance with a residual amount of a battery so that cells of low priorities are measured when the residual amount of the battery is small to reduce the number of times of re-selecting a cell and a method of operating the same.

The object is solved by a mobile communication terminal of claim 1.

The priorities are determined in accordance with the radiuses of the other cells based on the connected cell. The priorities are determined so that cells of regions having radiuses larger than the radius of the region of the connected cell are determined to have low priorities and that cells of regions having radiuses smaller than the radius of the region of the connected cell are determined to have high priorities.

The controller comprises a setting unit for re-setting a reference of measuring connectable cells in accordance with the received cell information or the residual amount of the battery and a data processor for re-selecting a connected cell among the measured cells in accordance with the re-set cell measuring reference.

The setting unit sets a cell measuring reference so that cells of priorities higher than or lower than the priority of the connected cell are measured in accordance with the residual amount of the battery.

When the residual amount of the battery is not more than a reference value I, the setting unit sets the cell measuring reference so that cells of priorities lower than or equal to the priority of the connected cell are measured.

When the mobile communication terminal moves at high speed, the setting unit sets the cell measuring reference so that cells of priorities lower than the priority of the connected cell are measured.

The data processor measures cells of priorities lower than the priority of the connected cell among the connectable cells in accordance with the cell measuring reference.

When the intensity of the receiving signal of the connected cell is no more than a threshold value α, the data processor re-selects a connected cell among the measured cells.

The data processor re-selects a connected cell among cells of low priorities selected among the measured cells.

The mobile communication terminal further comprises a determining unit for determining the intensity of the receiving signal of the connected cell or the residual amount of the battery of the mobile communication terminal.

The determining unit determines the data transmission rate Ec/No of the connected cell or whether internal trigger is generated by the high speed movement of the mobile communication terminal.

The determining unit determines cell measuring priorities of cells adjacent to the connected cell when cell information is received from the adjacent cells.
The object is solved by a method as claimed in claim 14.

The step (b) comprises the step of comparing the residual amount of the battery with a previously set reference value I.

The step (b) comprises the step of measuring cells of priorities lower than the priority of the currently connected cell when it is determined that the residual amount of the battery is no more than the reference value I and measuring cells of priorities higher than the priority of the connected cell when it is determined that the residual amount of the battery is no less than the reference value I.

The step (c) comprises the step of comparing the intensity of the receiving signal of the currently connected cell with a previously set threshold value α.

In the step (c), when it is determined that the intensity of the receiving signal of the cell is no more than the previously set threshold value α, a cell is re-selected among the measured cells.

The method of operating the mobile communication terminal further comprises the step of receiving information on cells adjacent to the connected cell to read the received information.

The method of operating the mobile communication terminal further comprises the step of determining cell priorities in accordance with the received cell information.

In the mobile communication terminal capable of re-selecting the cell in accordance with the residual amount of the battery of the present invention and the method of operating the same, the cell is re-selected in accordance with the information received from the connected cell or the cells adjacent to the connected cell and the cell measuring reference is re-set so that the cells of low priorities are measured in accordance with the residual amount of the battery. Therefore, it is possible to reduce the number of times of re-selecting the cell and to thus reduce the consumption amount of the battery.

### BRIEF DESCRIPTION OF THE DRAWINGS

The accompanying drawings, which are comprised to provide a further understanding of the invention and are incorporated in and constitute a part of this specification, illustrate embodiments of the invention and together with the description serve to explain the principles of the invention. In the drawings:

FIG. 1 illustrates the structure of a common mobile communication terminal.

FIG. 2 illustrates a conventional mobile communication terminal.

FIG. 3 is a block diagram illustrating the structure of a mobile communication terminal according to the present invention.

FIG. 4 illustrates a mobile communication terminal according to a first embodiment of the present invention.

FIG. 5 illustrates a mobile communication terminal according to a second embodiment of the present invention.

FIG. 6 is a flowchart illustrating a method of operating the mobile communication terminal according to the present invention.

FIG. 7 is a flowchart illustrating a mobile communication terminal according to another embodiment of the present invention.

### DETAILED DESCRIPTION OF PREFERRED EMBODIMENTS

Preferred embodiments of a mobile communication terminal capable of re-selecting a cell in accordance with a residual amount of a battery according to the present invention and a method of operating the same will be described in a more detailed manner with reference to the attached drawings.

According to the embodiments, a plurality of mobile communication terminals may exist.

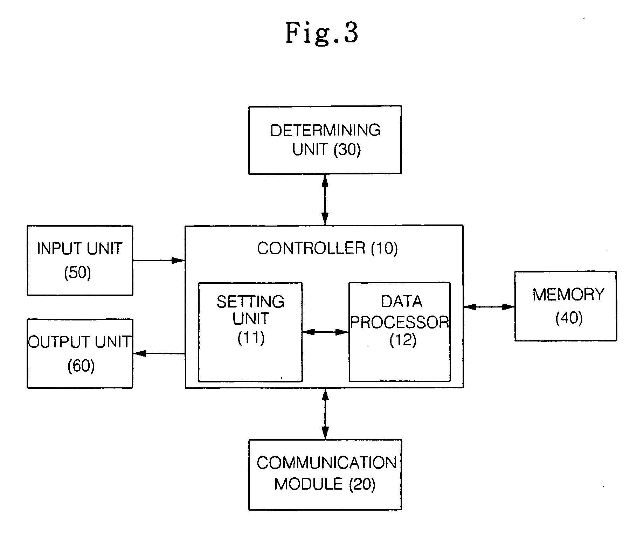

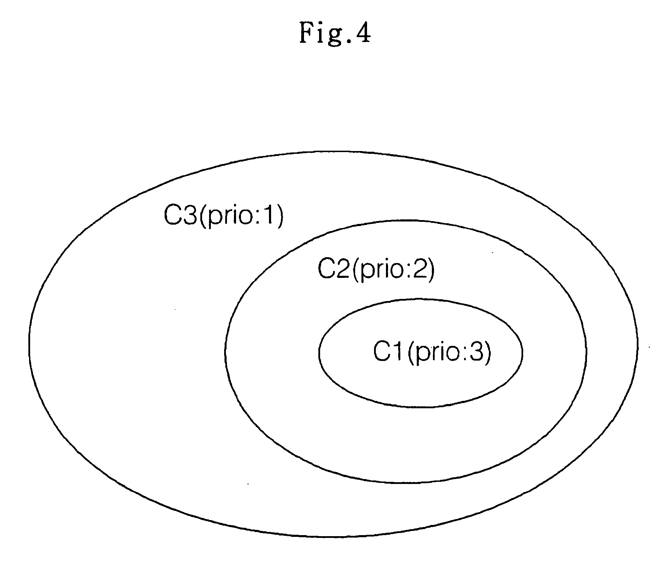

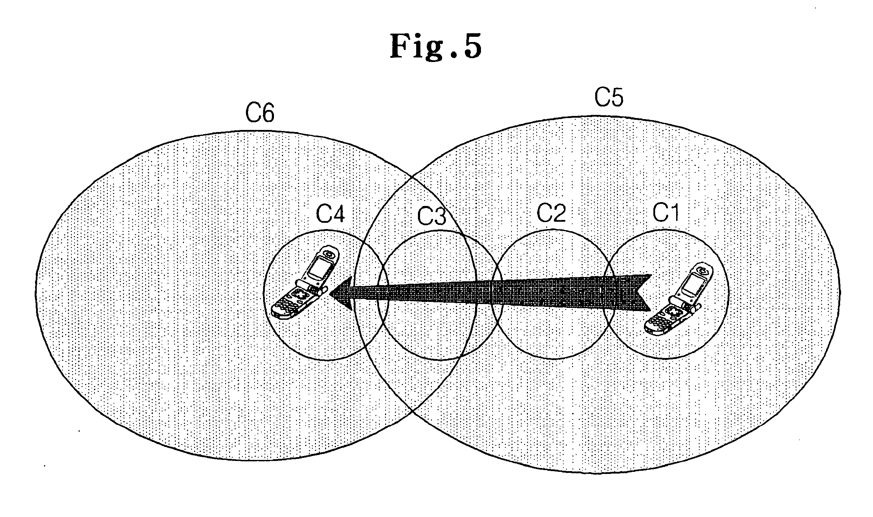

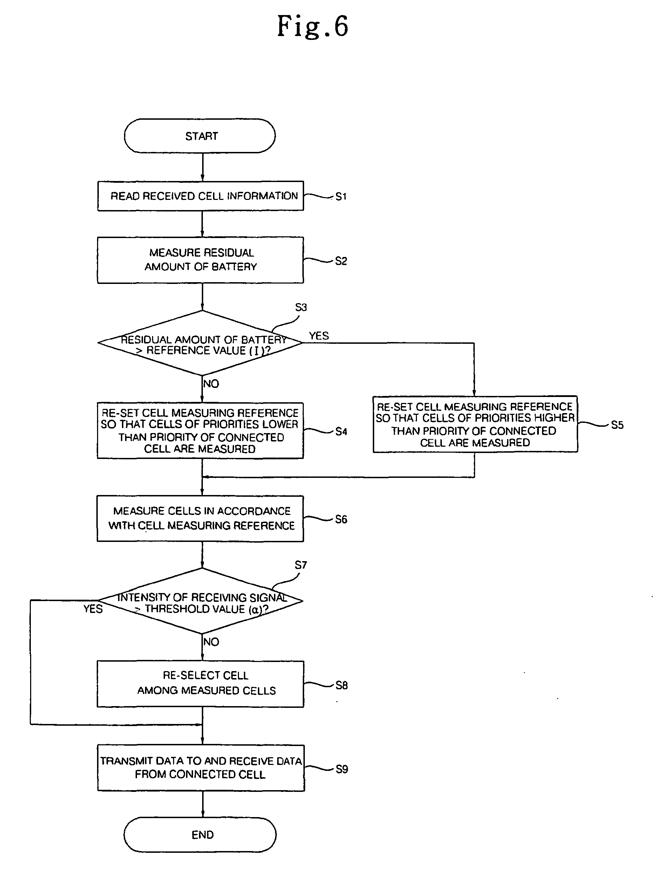

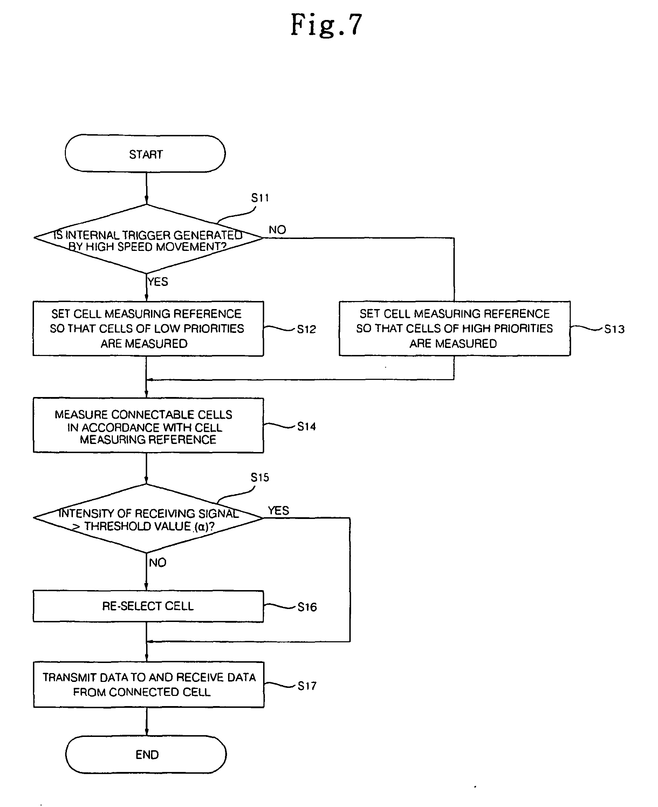

FIG. 3 is a block diagram illustrating the structure of a mobile communication terminal according to the present invention. FIG. 4 illustrates a mobile communication terminal according to a first embodiment of the present invention. FIG. 5 illustrates a mobile communication terminal according to a second embodiment of the present invention. FIG. 6 is a flowchart illustrating a method of operating the mobile communication terminal according to the present invention. FIG. 7 is a flowchart illustrating a mobile communication terminal according to another embodiment of the present invention.

As illustrated in FIG. 3, a mobile communication terminal capable of re-selecting a cell in accordance with a residual amount of a battery includes an input unit 50 to which data are input, an output unit 60 on which received data such as received cell information are displayed, a communication module 20 for receiving information on a plurality of cells having different priorities in a hierarchical cell structure (HCS) and for transmitting data to and receiving data from a connected cell, a memory 40 in which the cell information received through the communication module 20 is stored, and a controller 10 for measuring connectable cells in accordance with the received cell information or the residual amount of the battery so that the mobile communication terminal is connected to a cell selected among the measured cells.

Also, the mobile communication terminal further includes a determining unit 30 for determining intensity of a receiving signal of a connected cell or the residual amount of the battery of the mobile communication terminal.

The communication module 20 receives information on connectable cells and transmits data to and receives data from the connected cell in accordance with the received cell information.

At this time, the cell information received through the communication module 20 is stored in the memory 40.

That is, the cell information such as the frequency bands and priorities of the cells received through the communication module 20 is stored in the memory 40.

Set data of the mobile communication terminal are stored in the memory 40. At this time, when the connectable cells are measured, a cell measuring reference, a residual amount I of a based battery, and a threshold value α of the intensity of the receiving signal of the connected cell are stored.

The determining unit 30 determines cell information received from the connected cell or other cells adjacent to the connected cell when the mobile communication terminal is connected to the cell.

That is, the determining unit 30 determines the data transmission rate Ec/No of the currently connected cell and determines whether internal trigger is generated by the high speed movement of the mobile communication terminal. Also, the determining unit 30 determines the cell measuring priorities of the cells adjacent to the connected cell.

Also, the determining unit 30 determines the residual amount of the battery of the mobile communication terminal to compare the measured residual amount of the battery with the reference value I.

The controller 10 includes a setting unit 11 for re-setting a reference of measuring the connectable cells in accordance with the received cell information or the residual amount of the battery and a data processor 12 for re-selecting a connected cell among the cells measured in accordance with the re-set cell measuring reference.

The data processor 12 reads the cell information received through the communication module 20 to store the read cell information in the memory 40.

At this time, the data processor 12 measures connectable cells by the determination result of the determining unit 30 obtained in accordance with the read cell information or re-selects a cell selected among the measured cells as a connected cell.

That is, the data processor 12 measures connectable cells when it is determined by the determining unit 30 that the intensity of the receiving signal or the data transmission rate Ec/No of the connected cell is no more than the threshold value α to try connection to the corresponding cells through the communication module 20. Also, the data processor 12 measures the connectable cells when it is determined that internal trigger is generated by the high speed movement of the mobile communication terminal to try connection to the measured cells.

Also, in the case where it is determined that the intensity of the receiving signal or the data transmission rate Ec/No of the connected cell is no less than the threshold value α in accordance with the received cell information or that the internal trigger is not generated by the high speed movement of the mobile communication terminal, when it is determined by the determining unit 30 that the residual amount of the battery is no more than the reference value I, the data processor 12 measures connectable cells in accordance with the cell measuring reference.

At this time, when the residual amount of the battery of the mobile communication terminal is no more than the reference value I, the setting unit 11 re-sets a reference of measuring connectable cells in accordance with the cell information received through the communication module 20.

That is, when the residual amount of the battery is no more than the reference value I, the setting unit 11 re-sets a cell measuring reference so that cells of low priorities having regions larger than (or equal to) the region of the connected cell are measured to reduce the number of times of re-selecting a cell and to thus reduce the consumption amount of the battery of the mobile communication terminal.

For example, in the case where the cell to which the mobile communication terminal is currently connected is a pico cell, the setting unit 11 re-sets the cell measuring reference so that micro cells or macro cells of low priorities having radiuses larger than the radius of the pico cell to which the mobile communication terminal is connected are measured when the residual amount of the battery of the mobile communication terminal is no more than the reference value I.

On the other hand, when it is determined that the residual amount of the battery of the mobile communication terminal is no less than the reference value I, the setting unit 11 re-sets the cell measuring reference so that cells of high priorities having regions smaller than (or equal to) the region of the connected cell are measured to improve the intensity of the receiving signal or the data transmission rate of the cell.

For example, in the case where the cell to which the mobile communication terminal is currently connected is a macro cell, the setting unit 11 re-sets the cell measuring reference so that micro cells or pico cells of high priorities having radiuses smaller than the radius of the macro cell that is the connected cell are measured when the residual amount of the battery of the mobile communication terminal is no less than the reference value I.

At this time, when it is determined that the residual amount of the battery is no more than the reference value I in accordance with the cell measuring reference re-set by the setting unit 11, the data processor 12 measures cells of priorities equal to or lower than the priority of the connected cell in accordance with the re-set cell measuring reference to re-select a connected cell among the measured cells.

At this time, when the intensity of the receiving signal of the connected cell is no more than the threshold value α, the data processor 12 re-selects a connected cell among the measured cells.

For example, in the case where the currently connected cell is C1, a cell including the cell C1 and having a region larger than the region of the cell C1 is C2, and a cell adjacent to the cell C2 and having a region equal to the region of the cell C1 is C3, when it is determined by the determining unit 30 that the residual amount of the battery of the mobile communication terminal is no more than the reference value I, the data processor 12 re-selects the cell C2 as a connected cell.

At this time, when it is determined that the intensity of the receiving signal of the cell C2 is no more than the threshold value α, the data processor 12 re-selects the cell C3 adjacent to the cell C2 and having a region equal to the region of the cell C1 as a connected cell.

Also, the setting unit 11 sets the cell measuring reference so that cells of priorities higher than the priority of the connected cell are measured when it is determined by the determining unit 30 that the mobile communication terminal moves at low speed and that cells of priorities lower than the priority of the connected cell are measured when it is determined by the determining unit 30 that the mobile communication terminal moves at high speed.

At this time, the data processor 12 re-selects a cell selected among the cells of priorities higher than (or equal to) the priority of the connected cell as a connected cell when it is determined that the mobile communication terminal moves at low speed in accordance with the cell measuring reference re-set by the setting unit 11 and re-selects a cell selected among the cells of priorities lower than (or equal to) the priority of the connected cell as a connected cell when it is determined that the mobile communication terminal moves at high speed in accordance with the cell measuring reference re-set by the setting unit 11.

As illustrated in FIG. 4, the mobile communication terminal determines a cell C1 having the smallest radius as a cell having the highest priority 3 and determines a cell C2 having a radius larger than the radius of the cell C1 as a cell having the next highest priority 2.

Also, the mobile communication terminal determines a cell C3 having the largest radius as a cell having the lowest priority 1.

Also, as illustrated in FIG. 5, a HCS including a plurality of cells having different priorities includes a cell C1 to which the mobile communication terminal is connected, cells C2, C3, and C4 adjacent to the cell C1 and having the same priorities, a cell C5 including the cells C1, C2, and C3 and having a low priority and a region larger than the regions of the cells C1, C2, and C3, and a cell C6 including the cells C3 and C4 and having a low priority and a region larger than the regions of the cells C3 and C4.

At this time, during change in position from the cell C1 to the cell C4, the mobile communication terminal does not re-select a cell among the cells C2, C3, and C4 but determines the residual amount of the battery of the mobile communication terminal to measure the cells C5 and C6 of low priorities having radiuses larger than the radius of the cell C1 and to re-select the cell C5 whose receiving signal has larger intensity as a connected cell between the measured cells C5 and C6 when it is determined that the residual amount of the battery of the mobile communication terminal is no more than the reference value I.

That is, during change in position from the cell C1 to the cell C4, the mobile communication terminal re-selects the cell C6 including the cell C4 as a connected cell between the cells C5 and C6 measured in accordance with the set cell measuring reference so that it is possible to reduce the number of times of re-selecting a cell in accordance with movement in position.

A method of operating the mobile communication terminal according to the present invention of the above-described structure will be described with reference to FIGs. 6 and 7.

As illustrated in FIG. 6, cell information received from a plurality of cells adjacent to the mobile communication terminal is read and the read cell information is stored in a memory (S1).

At this time, the intensity of the receiving signal and the data transmission rate of the cell of the mobile communication terminal are determined to re-select a cell (S7 and S8).

Also, the mobile communication terminal measures a residual amount of a battery (S2) to re-set a cell measuring reference in accordance with the measured residual amount of the battery (S3 to S5).

At this time, the residual amount of the battery of the mobile communication terminal is compared with the previously set reference value I and, when it is determined that the residual amount of the battery is no less than the reference value I (S3), a cell measuring reference is re-set so that cells of priorities higher than or equal to the priority of the currently connected cell are measured (S4) and connectable cells are measured in accordance with the re-set cell measuring reference (S6).

On the other hand, when it is determined that the residual amount of the battery of the mobile communication terminal is no more than the reference value I (S3), a cell measuring reference is re-set so that cells of priorities lower than or equal to the priority of the currently connected cell are measured (S5) and connectable cells are measured in accordance with the re-set cell measuring reference (S6).

When the intensity of the receiving signal of the cell to which the mobile communication terminal is connected is no less than the threshold value α (S7), connection to the currently connected cell is maintained and data are transmitted to and received from the connected cell (S9). When the intensity of the receiving signal of the connected cell is no more than the threshold value α (S7), a cell is re-selected among a plurality of cells measured in accordance with the cell measuring reference (S8) and the mobile communication terminal is connected to the re-selected cell to transmit data to and receive data from the connected cell (S9).

At this time, the cell whose receiving signal has the largest intensity is re-selected between the cells of the lowest priorities selected among the plurality of cells measured in accordance with the cell measuring reference.

Also, in a method of operating the mobile communication terminal according to another embodiment of the present invention, as illustrated in FIG. 7, during change in the position of the mobile communication terminal, a cell is re-selected among the measured cells in accordance with whether internal trigger is generated by the high speed movement of the mobile communication terminal.

At this time, it is determined whether the internal trigger is generated by the high speed movement of the mobile communication terminal and, when it is determined that the internal trigger is not generated (S11), a cell measuring reference is set so that cells of priorities higher than (or equal to) the priority of the currently connected cell are measured (S13).

Cells of priorities higher than or equal to the priority of the connected cell are measured among the cells adjacent to the connected cell in accordance with the set cell measuring reference (S14).

On the other hand, when it is determined that the internal trigger is generated by the high speed movement of the mobile communication terminal (S11), a cell measuring reference is re-set so that cells of priorities lower than (or equal to) the priority of the connected cell are measured (S12).

At this time, the mobile communication terminal measures cells of priorities lower than or equal to the priority of the connected cell among the cells adjacent to the connected cell in accordance with the set cell measuring reference (S14).

The intensities of the receiving signals of the connected cell and the other measured cells are determined in accordance with change in the position of the mobile communication terminal. When it is determined that the intensity of the receiving signal of the connected cell is no less than the threshold value α (S15), connection to the currently connected cell is maintained and data are transmitted to and received from the connected cell (S17). When it is determined that the intensity of the receiving signal of the connected cell is no more than the threshold value α (S15), a cell is re-selected among the plurality of cells measured in accordance with the cell measuring reference (S16) and the mobile communication terminal is connected to the re-selected cell to transmit data to and receive data from the connected cell (S17).

As described above, in the mobile communication terminal capable of re-selecting the cell in accordance with the residual amount of the battery of the present invention and the method of operating the same, the cell is re-selected in accordance with the information received from the connected cell or the cells adjacent to the connected cell and the cell measuring reference is re-set so that the cells of low priorities are measured in accordance with the residual amount of the battery. Therefore, it is possible to reduce the number of times of re-selecting the cell and to thus reduce the consumption amount of the battery.

## Claims

1. A mobile communication terminal comprising:
a communication module (20) adapted to receive information on a plurality of cells (C2, C3) having different priorities in a hierarchical cell structure, HCS, and to transmit data to and to receive data from a connected cell (C1);
said terminal further comprising
a determining unit (30)
compare the residual amount of battery with a reference value; and a controller (10) adapted to reset a cell measuring reference based on the result of comparison,
measure whichever of cells (C2, C3) adjacent to the connected cell (C1) can be connected in accordance with cell measuring reference, and
if a received signal strength of the connected cell (C1) is less than a threshold, to connect the mobile communication terminal to a cell (C2, C3) selected among the measured cells.

2. The mobile communication terminal as claimed in claim 1, wherein the priorities are determined in accordance with the radiuses of the other cells based on the connected cell (C1).

3. The mobile communication terminal as claimed in claim 2, wherein the priorities are determined so that cells (C5, C6) of regions having radiuses larger than the radius of the region of the connected cell (C1) are determined to have low priorities and that cells (C2, C3, C4) of regions having radiuses smaller than the radius of the region of the connected cell (C1) are determined to have high priorities.

4. The mobile communication terminal as claimed in claim 1, wherein the control-1er (10) comprises:
a setting unit (11) adapted to re-set a reference of measuring connectable cells in accordance with the received cell information or the residual amount of the battery; and
a data processor (12) adapted to re-select a connected cell among the measured cells in accordance with the re-set cell measuring reference.

5. The mobile communication terminal as claimed in claim 4, wherein the setting unit (11) is adapted to set a cell measuring reference so that cells of priorities higher than or lower than the priority of the connected cell are measured in accordance with the residual amount of the battery.

6. The mobile communication terminal as claimed in claim 5, wherein, when the residual amount of the battery is no more than a reference value I, the setting unit (11) is adapted to set the cell measuring reference so that cells of priorities lower than or equal to the priority of the connected cell are measured.

7. The mobile communication terminal as claimed in claim 4, wherein, when the mobile communication terminal moves, the setting unit (11) is adapted to set the cell measuring reference so that cells of priorities lower than the priority of the connected cell are measured.

8. The mobile communication terminal as claimed in claim 4, wherein the data processor (12) is adapted to measure cells of priorities lower than the priority of the connected cell among the connectable cells in accordance with the cell measuring reference.

9. The mobile communication terminal as claimed in claim 8, wherein, when the intensity of the receiving signal of the connected cell (C1) is no more than a threshold value, the data processor is adapted to re-select a connected cell (C1) among the measured cells.

10. The mobile communication terminal as claimed in claim 9, wherein the data processor (12) is adapted to re-select a connected cell (C1) among cells of low priorities selected among the measured cells.

11. The mobile communication terminal as claimed in claim 1, further comprising a determining unit (30) adapted to determine the intensity of the receiving signal of the connected cell or the residual amount of the battery of the mobile communication terminal.

12. The mobile communication terminal as claimed in claim 11, wherein the determining unit (30) is adapted to determine the data transmission rate Ec/No of the connected cell (C1) or whether internal trigger is generated by the high speed movement of the mobile communication terminal.

13. The mobile communication terminal as claimed in claim 11, wherein the determining unit (30) is adapted to determine cell measuring priorities of cells adjacent to the connected cell when cell information is received from the adjacent cells.

14. A method of operating a mobile communication terminal capable of re-selecting a cell in accordance with a residual amount of a battery, said method comprising the steps of:
(a) measuring (S2) the residual amount of the battery when internal trigger (S11) is not generated by movement of the mobile communication terminal;
(b) comparing (S3) the residual amount of battery with a reference value, re-setting (S4, S5) a cell measuring reference based on the result of comparison, measuring (S6) whichever of cells (C2, C3) adjacent to the connected cell (C1) can be connected in accordance with cell measuring reference, and
(c) if a received signal strength (S7) of the connected cell (C1) is less than a threshold re-selecting (S8) a cell among the measured cells and connecting the mobile communication terminal to the selected cell.

15. The method as claimed in claim 14, wherein the step (b) comprises the step of comparing the residual amount of the battery with a previously set reference value I.

16. The method as claimed in claim 15, wherein the step (b) comprises the step of measuring cells of priorities lower than the priority of the currently connected cell when it is determined that the residual amount of the battery is no more than the reference value I and measuring cells of priorities higher than the priority of the connected cell when it is determined that the residual amount of the battery is no less than the reference value I.

17. The method as claimed in claim 14, wherein the step (c) comprises the step of comparing the intensity of the receiving signal of the currently connected cell with a previously set threshold value.

18. The method as claimed in claim 17, wherein, in the step (c), when it is determined that the intensity of the receiving signal of the cell is no more than the previously set threshold value, a cell is re-selected among the measured cells.

19. The method as claimed in claim 14, further comprising the step of receiving information on cells adjacent to the connected cell to read the received information.

20. The method as claimed in claim 19, further comprising the step of determining cell priorities in accordance with the received cell information.

## Patentansprüche

1. Mobilkommunikationsendgerät, das umfasst:
ein Kommunikationsmodul (20), das ausgelegt ist, um Informationen über mehrere Zellen (C2, C3) zu empfangen, die unterschiedliche Prioritäten in einer hierarchischen Zellenstruktur, HCS, aufweisen, und Daten zu einer verbundenen Zelle (C1) zu senden und von ihr zu empfangen;
wobei das Endgerät ferner umfasst:
eine Bestimmungseinheit (30), die ausgelegt ist, um
die verbleibende Kapazität der Batterie mit einem Referenzwert zu vergleichen; und
eine Steuereinheit (10), die ausgelegt ist, um eine Zellenmessreferenz basierend auf dem Ergebnis des Vergleichs zurückzusetzen,
zu messen, welche der Zellen (C2, C3), die zu der verbundenen Zelle (C1) benachbart sind, gemäß der Zellenmessreferenz verbunden werden können, und
dann, wenn eine empfangene Signalstärke der verbundenen Zelle (C1) kleiner ist als ein Schwellenwert, das Mobilkommunikationsendgerät mit einer aus den gemessenen Zellen ausgewählten Zelle (C2, C3) zu verbinden.

2. Mobilkommunikationsendgerät nach Anspruch 1, wobei die Prioritäten gemäß den Radien der anderen Zellen basierend auf der verbundenen Zelle (C1) bestimmt werden.

3. Mobilkommunikationsendgerät nach Anspruch 2, wobei die Prioritäten bestimmt werden, so dass für Zellen (C5, C6) von Bereichen, die Radien aufweisen, die größer sind als der Radius des Bereichs der verbundenen Zelle (C1), bestimmt wird, dass sie niedrige Prioritäten aufweisen, und dass für Zellen (C2, C3, C4) von Bereichen, die Radien aufweisen, die kleiner sind als der Radius des Bereichs der verbundenen Zelle (C1), bestimmt wird, dass sie hohe Prioritäten aufweisen.

4. Mobilkommunikationsendgerät nach Anspruch 1, wobei die Steuereinheit (10) umfasst:
eine Einstelleinheit (11), die ausgelegt ist, um eine Referenz zum Messen von Zellen, die verbunden werden können, gemäß den empfangenen Zelleninformationen oder der verbleibenden Kapazität der Batterie erneut einzustellen; und
einen Datenprozessor (12), der ausgelegt ist, um eine verbundene Zelle aus den gemessenen Zellen gemäß der erneut eingestellten Messreferenz erneut auszuwählen.

5. Mobilkommunikationsendgerät nach Anspruch 4, wobei die Einstelleinheit (11) ausgelegt ist, um eine Zellenmessreferenz einzustellen, so dass Zellen mit Prioritäten, die höher oder niedriger sind als die Priorität der verbundenen Zelle, gemäß der verbleibenden Kapazität der Batterie gemessen werden.

6. Mobilkommunikationsendgerät nach Anspruch 5, wobei dann, wenn die verbleibende Kapazität der Batterie nicht größer ist als ein Referenzwert I, die Einstelleinheit (11) ausgelegt ist, um die Zellenmessreferenz einzustellen, so dass Zellen mit Prioritäten, die niedriger oder gleich der Priorität der verbundenen Zelle sind, gemessen werden.

7. Mobilkommunikationsendgerät nach Anspruch 4, wobei dann, wenn sich das Mobilkommunikationsendgerät bewegt, die Einstelleinheit (11) ausgelegt ist, die Zellenmessreferenz einzustellen, so dass Zellen mit Prioritäten, die niedriger als die Priorität der verbundenen Zelle sind, gemessen werden.

8. Mobilkommunikationsendgerät nach Anspruch 4, wobei der Datenprozessor (12) ausgelegt ist, um unter den Zellen, die verbunden werden können, Zellen mit Prioritäten, die niedriger als die Priorität der verbundenen Zelle sind, gemäß der Zellenmessreferenz zu messen.

9. Mobilkommunikationsendgerät nach Anspruch 8, wobei dann, wenn die Intensität des Empfangssignals der verbundenen Zelle (C1) nicht größer ist als ein Schwellenwert, der Datenprozessor ausgelegt ist, erneut eine verbundene Zelle (C1) aus den gemessenen Zellen auszuwählen.

10. Mobilkommunikationsendgerät nach Anspruch 9, wobei der Datenprozessor (12) ausgelegt ist, um erneut eine verbundene Zelle aus den Zellen mit niedrigen Prioritäten, die aus den gemessenen Zellen ausgewählt sind, auszuwählen.

11. Mobilkommunikationsendgerät nach Anspruch 1, das ferner eine Bestimmungseinheit (30) umfasst, die ausgelegt ist, um die Intensität des Empfangssignals der verbundenen Zelle oder die verbleibende Kapazität der Batterie des Mobilkommunikationsendgeräts zu bestimmen.

12. Mobilkommunikationsendgerät nach Anspruch 11, wobei die Bestimmungseinheit (30) ausgelegt ist, um die Datenübertragungsrate Ec/No der verbundenen Zelle (C1) zu bestimmen oder zu bestimmen, ob ein interner Auslöser durch die Bewegung des Mobilkommunikationsendgeräts mit hoher Geschwindigkeit erzeugt wird.

13. Mobilkommunikationsendgerät nach Anspruch 11, wobei die Bestimmungseinheit (30) ausgelegt ist, um Zellenmessprioritäten von Zellen, die zu der verbundenen Zelle benachbart sind, zu bestimmen, wenn Zelleninformationen von den benachbarten Zellen empfangen werden.

14. Verfahren zum Betreiben eines Mobilkommunikationsendgeräts, das erneut eine Zelle gemäß einer verbleibenden Kapazität einer Batterie auswählen kann, wobei das Verfahren die Schritte umfasst:
(a) Messen (S2) der verbleibenden Kapazität der Batterie, wenn ein interner Auslöser (S11) nicht durch die Bewegung des Mobilkommunikationsendgeräts erzeugt wird;
(b) Vergleichen (S3) der verbleibenden Kapazität der Batterie mit einem Referenzwert (S4, S5), erneutes Einstellen einer Zellenmessreferenz basierend auf dem Vergleichsergebnis, Messen (S6) welche der Zellen (C2, C3), die zu der verbundenen Zelle (C1) benachbart sind, gemäß der Zellenmessreferenz verbunden werden können, und
c) wenn eine empfangene Signalstärke (S7) der verbundenen Zelle (C1) kleiner ist als ein Schwellenwert, erneutes Auswählen (S8) einer Zelle aus den gemessenen Zellen und Verbinden des Mobilkommunikationsendgeräts mit der ausgewählten Zelle.

15. Verfahren nach Anspruch 14, wobei der Schritt (b) den Schritt des Vergleichens der verbleibenden Kapazität der Batterie mit einem vorher eingestellten Referenzwert I umfasst.

16. Verfahren nach Anspruch 15, wobei der Schritt (b) den Schritt des Messens von Zellen mit Prioritäten, die niedriger sind als die Priorität der aktuell verbundenen Zelle, wenn bestimmt wird, dass die verbleibende Kapazität der Batterie nicht größer ist als der Referenzwert I, und des Messens von Zellen mit Prioritäten, die höher sind als die Priorität der verbundenen Zelle, wenn bestimmt wird, dass die verbleibende Kapazität der Batterie nicht kleiner als der Referenzwert I ist, umfasst.

17. Verfahren nach Anspruch 14, wobei der Schritt (c) den Schritt des Vergleichens der Intensität des Empfangssignals der aktuell verbundenen Zelle mit einem vorher eingestellten Schwellenwert umfasst.

18. Verfahren nach Anspruch 17, wobei in Schritt (c), wenn bestimmt wird, dass die Intensität des Empfangssignal der Zelle nicht größer als der vorher eingestellte Schwellenwert ist, erneut eine Zelle aus den gemessenen Zellen ausgewählt wird.

19. Verfahren nach Anspruch 14, das ferner den Schritt des Empfangens von Informationen über Zellen, die der verbundenen Zelle benachbart sind, umfasst, um die empfangenen Informationen zu lesen.

20. Verfahren nach Anspruch 19, das ferner den Schritt des Bestimmens von Zellenprioritäten gemäß den empfangenen Zelleninformationen umfasst.

## Revendications

1. Terminal de communication mobile comprenant :
un module de communication (20) apte à recevoir des informations sur une pluralité de cellules (C2, C3) ayant différentes priorités dans une structure hiérarchique de cellules, HCS, à transmettre des données à une cellule connectée (C1) et à recevoir des données d'une cellule connectée (C1) ;
ledit terminal comprenant en outre :
une unité de détermination (30) apte à comparer la quantité résiduelle de batterie à une valeur de référence ; et
un organe de commande (10) apte à réinitialiser une référence de mesure de cellule sur la base du résultat de comparaison, mesurer laquelle des cellules (C2, C3) adjacentes à la cellule connectée (C1) peut être connectée en fonction de la référence de mesure de cellule, et, si une force de signal reçu de la cellule connectée (C1) est inférieure à un seuil, connecter le terminal de communication mobile à une cellule (C2, C3) sélectionnée parmi les cellules mesurées.

2. Terminal de communication mobile selon la revendication 1, dans lequel les priorités sont déterminées en fonction des rayons des autres cellules sur la base de la cellule connectée (C1).

3. Terminal de communication mobile selon la revendication 2, dans lequel les priorités sont déterminées de sorte que des cellules (C5, C6) de régions ayant des rayons supérieurs au rayon de la région de la cellule connectée (C1) sont déterminées pour avoir des priorités basses et des cellules (C2, C3, C4) de régions ayant des rayons inférieurs au rayon de la région de la cellule connectée (C1) sont déterminées pour avoir des priorités hautes.

4. Terminal de communication mobile selon la revendication 1, dans lequel l'organe de commande (10) comprend :
une unité de réglage (11) apte à réinitialiser une référence de mesure de cellules connectables en fonction des informations de cellules reçues ou de la quantité résiduelle de la batterie ; et
un processeur de données (12) apte à resélectionner une cellule connectée parmi les cellules mesurées en fonction de la référence de mesure de cellule réinitialisée.

5. Terminal de communication mobile selon la revendication 4, dans lequel l'unité de réglage (11) est apte à régler une référence de mesure de cellule de sorte que des cellules de priorités supérieures ou inférieures à la priorité de la cellule connectée sont mesurées en fonction de la quantité résiduelle de la batterie.

6. Terminal de communication mobile selon la revendication 5, dans lequel, lorsque la quantité résiduelle de la batterie ne dépasse pas une valeur de référence I, l'unité de réglage (11) est apte à régler la référence de mesure de cellule de sorte que des cellules de priorités inférieures ou égales à la priorité de la cellule connectée sont mesurées.

7. Terminal de communication mobile selon la revendication 4, dans lequel, lorsque le terminal de communication mobile se déplace, l'unité de réglage (11) est apte à régler la référence de mesure de cellule de sorte que des cellules de priorités inférieures à la priorité de la cellule connectée sont mesurées.

8. Terminal de communication mobile selon la revendication 4, dans lequel le processeur de données (12) est apte à mesurer des cellules de priorités inférieures à la priorité de la cellule connectée parmi les cellules connectables en fonction de la référence de mesure de cellule.

9. Terminal de communication mobile selon la revendication 8, dans lequel, lorsque l'intensité du signal de réception de la cellule connectée (C1) ne dépasse pas une valeur de seuil, le processeur de données est apte à resélectionner une cellule connectée (C1) parmi les cellules mesurées.

10. Terminal de communication mobile selon la revendication 9, dans lequel le processeur de données (12) est apte à resélectionner une cellule connectée (C1) parmi des cellules de priorités basses sélectionnées parmi les cellules mesurées.

11. Terminal de communication mobile selon la revendication 1, comprenant en outre une unité de détermination (30) apte à déterminer l'intensité du signal de réception de la cellule connectée ou la quantité résiduelle de la batterie du terminal de communication mobile.

12. Terminal de communication mobile selon la revendication 11, dans lequel l'unité de détermination (30) est apte à déterminer le débit de transmission de données Ec/No de la cellule connectée (C1) ou si un déclenchement interne est généré par le déplacement à grande vitesse du terminal de communication mobile.

13. Terminal de communication mobile selon la revendication 11, dans lequel l'unité de détermination (30) est apte à déterminer des priorités de mesure de cellule de cellules adjacentes à la cellule connectée lorsque des informations de cellule sont reçues des cellules adjacentes.

14. Procédé de fonctionnement d'un terminal de communication mobile capable de resélectionner une cellule en fonction d'une quantité résiduelle d'une batterie, ledit procédé comprenant les étapes de :
(a) la mesure (S2) de la quantité résiduelle de la batterie lorsqu'un déclenchement interne (S11) n'est pas généré par un déplacement du terminal de communication mobile ;
(b) la comparaison (S3) de la quantité résiduelle de batterie à une valeur de référence, la réinitialisation (S4, S5) d'une référence de mesure de cellule sur la base du résultat de comparaison, la mesure (S6) de laquelle des cellules (C2, C3) adjacentes à la cellule connectée (C1) peut être connectée en fonction de la référence de mesure de cellule, et
(c) si une force de signal reçu (S7) de la cellule connectée (C1) est inférieure à un seuil, la resélection (S8) d'une cellule parmi les cellules mesurées et la connexion du terminal de communication mobile à la cellule sélectionnée.

15. Procédé selon la revendication 14, dans lequel l'étape (b) comprend l'étape de la comparaison de la quantité résiduelle de la batterie à une valeur de référence préalablement réglée I.

16. Procédé selon la revendication 15, dans lequel l'étape (b) comprend l'étape de la mesure de cellules de priorités inférieures à la priorité de la cellule actuellement connectée lorsqu'il est déterminé que la quantité résiduelle de la batterie ne dépasse pas la valeur de référence I et la mesure de cellules de priorités supérieures à la priorité de la cellule connectée lorsqu'il est déterminé que la quantité résiduelle de la batterie n'est pas inférieure à la valeur de référence I.

17. Procédé selon la revendication 14, dans lequel l'étape (c) comprend l'étape de la comparaison de l'intensité du signal de réception de la cellule actuellement connectée à une valeur de seuil préalablement réglée.

18. Procédé selon la revendication 17, dans lequel, à l'étape (c), lorsqu'il est déterminé que l'intensité du signal de réception de la cellule ne dépasse pas la valeur de seuil préalablement réglée, une cellule est resélectionnée parmi les cellules mesurées.

19. Procédé selon la revendication 14, comprenant en outre l'étape de la réception d'informations sur des cellules adjacentes à la cellule connectée pour lire les informations reçues.

20. Procédé selon la revendication 19, comprenant en outre l'étape de la détermination de priorités de cellules en fonction des informations de cellules reçues.
